# FASCICULE DE BREVET EUROPEEN

(11) **EP 2 428 457 B1**
(45) Date de publication et mention de la délivrance du brevet: **13.11.2013**
(21) Numéro de dépôt: 11180280.7
(22) Date de dépôt: 06.09.2011
(51) Int. Cl.: B65D 5/02, B65D 5/42, G06K 19/04

(54) **Feuille d'emballage avec système d'identification radiofréquence et etui d'emballage constitué d'une telle feuille d'emballage**
Verpackungsfolie mit Funkfrequenz-Identifikationssystem, und Verpackungshülle bestehend aus einer solchen Verpackungsfolie
Packaging sheet with radiofrequency identification system and packaging case made up from such a packaging sheet

(30) Priorité: 09.09.2010 FR 1057171
(43) Date de publication de la demande: 14.03.2012
(73) Titulaire: Centre Technique de l'Industrie des Papiers, Cartons et Celluloses, F-38400 Sait-Martin d'Heres (FR)
(72) Inventeur: Piette, Paul, 59552 Lambres-lez-Douai (FR); Morin, Véronique, 38760 Saint-Paul-de-Varces (FR)
(74) Mandataire: Balesta, Pierre

(56) Documents cités:
- WO-A2-2005/024745
- US-A1- 2004 070 504

## Description

L'invention concerne les emballages de produits munis d'un système d'identification radiofréquence. L'invention porte en particulier sur la conception des feuilles d'emballage munies d'un tel système d'identification radiofréquence. Ces feuilles d'emballage peuvent être acheminées chez les industriels pour emballer leurs produits, lesdites feuilles d'emballage étant alors mises en forme pour former l'emballage réceptionnant le produit. Toutefois, ces feuilles d'emballage objet de l'invention peuvent être préformées sous la forme d'étuis d'emballage et livrées aux industriels, ces étuis permettant alors la réception des produits, l'industriel n'ayant plus qu'à achever la formation et la fermeture de l'étui pour constituer l'emballage recevant ledit produit. A ce titre, l'invention concerne également un étui d'emballage avec système d'identification radiofréquence constitué d'une telle feuille d'emballage objet de l'invention, ainsi que le procédé de fabrication des étuis d'emballage avec système d'identification radiofréquence.

On entend par feuille d'emballage notamment les feuilles pour le cartonnage, le boîtage, l'archivage ou autres, réalisées notamment en papier, en carton ou en matière plastique.

Les emballages de produits sont constitués au moyen de feuilles d'emballage qui présentent une face interne et une face externe. Cette face externe comprend très souvent des impressions et inscriptions présentant à la fois un effet esthétique et ayant pour but d'informer le consommateur sur la nature du produit, sa composition, sa date de péremption ou autres.

Les feuilles d'emballage peuvent être acheminées telles quelles chez l'industriel qui se charge de mettre en forme l'emballage au moyen de ladite feuille au moment du conditionnement du produit. Une autre option consiste à préformer la feuille d'emballage sous la forme d'un étui, avant son acheminement chez l'industriel, celui-ci glissant alors le produit dans l'étui et achevant la fermeture de l'emballage au moment de son conditionnement.

A ce titre, la feuille d'emballage comprend au moins un premier bord longitudinal comprenant un rabat longitudinal et un second bord longitudinal, cette feuille d'emballage étant pliée en sorte de réunir le premier bord et le second bord, le rabat sur le premier bord étant fixé vis-à-vis du second bord notamment par collage. La jonction du premier bord avec le second bord permet ainsi de constituer l'étui. Bien entendu une telle feuille d'emballage peut permettre la mise en oeuvre d'emballage de formes plus ou moins complexes dans quel cas elle peut comprendre plusieurs premiers et seconds bords longitudinaux, chaque premier bord longitudinal, disposant d'un rabat, étant respectivement fixé à chaque second bord longitudinal attenant, après pliage de la feuille.

Il est connu d'équiper des emballages de produits d'un système d'identification radiofréquence, plus couramment appelés système RFID. Ce système d'identification radiofréquence permet le stockage de données relatives aux produits emballés en vue notamment d'assurer la traçabilité du produit. Ce système d'identification radiofréquence peut en outre constituer un émetteur antivol capable d'être détecté par des appareils de détection disposés par exemple aux entrées de magasins.

Parmi les systèmes RFID, on connaît en premier lieu les étiquettes RFID, très répandues sur le marché. De telles étiquettes RFID sont généralement collées sur la face extérieure de l'emballage contenant le produit.

On connaît également le document US 2008/0088459 qui divulgue un emballage comportant sur sa face externe un système d'identification radiofréquence comportant une première antenne imprégnée sur la feuille d'emballage au moment de sa conception et une pastille collée à proximité de la première antenne, voire au contact de celle-ci, cette pastille comportant une puce de stockage de données munie d'une seconde antenne assurant la connexion avec la première antenne.

Un inconvénient de ce type d'emballages de produits est la détérioration possible du système d'identification radiofréquence. En effet, l'emballage contenant le produit se déplace généralement sur une chaine de conditionnement pour être stockée sur des palettes ou dans des caisses de gros volume, les produits étant ensuite manipulés pour être mis en rayon dans les magasins. Durant toutes ces étapes de manipulation des emballages contenant les produits, le système d'identification radiofréquence peut être endommagé du fait des chocs qu'il est susceptible de subir.

En outre, l'accessibilité du système d'identification radiofréquence, disposé à l'extérieur de l'emballage, rend possible sa dégradation volontaire par une personne désirant notamment dérober le produit contenu dans son emballage.

Le document US 2004/0070504 A1 propose de cocher un système RFID entre le rabat et la face externe d'une boîte en carton (base pour le préambule de la revendication 1).

La présente invention vise notamment à pallier tout risque de dégradation du système d'identification radiofréquence tout en optimisant les cadences de positionnement du système RFID. Cet objectif est atteint par l'invention qui prévoit une feuille d'emballage munie d'un système d'identification radiofréquence telle que définie à la revendication 1. Cette feuille d'emballage comprend au moins deux bords, le premier des deux bords comprenant un rabat, ladite feuille étant notamment configurée pour former un étui d'emballage lors de la fixation du rabat sur le second des deux bords, en sorte de réceptionner les produits à emballer lors du conditionnement. En outre, le système d'identification radiofréquence est agencé soit sur le rabat soit sur le second bord, en sorte d'être dissimulé entre ledit rabat et ledit second bord lors de leur fixation entre eux. Ainsi, lors de la constitution ultérieure de l'étui d'emballage puis de l'emballage contenant le produit à conditionner, au moyen de ladite feuille d'emballage munie du système d'identification radiofréquence, on comprend que ce système d'identification radiofréquence est positionné entre le rabat et le second bord de la feuille d'emballage qui sont fixés entre eux, ce qui empêche tout contact tant depuis l'intérieur de l'emballage que depuis l'extérieur de celui-ci, le système d'identification radiofréquence étant protégé et dissimulé d'un coté par le rabat et de l'autre par le second bord. L'emballage est par conséquent protégé contre les agressions extérieures dues aux chocs que cet emballage peut subir lors de sa manipulation. Cela empêche également tout risque de dégradations volontaires depuis l'extérieur par un individu. Cela empêche en outre les risques de dégradations depuis l'intérieur notamment lors du positionnement du produit à conditionner dans l'étui d'emballage.

La feuille d'emballage selon l'invention peut en outre comprendre plusieurs paires de bords, lorsqu'elle permet la conception d'un emballage de formes plus ou moins complexes. Dans ce cas, l'un des bords de chaque paire de bords comprend un rabat qui se fixe sur le second des bords de chaque paire de bords. Au moins l'un des rabats reçoit un système d'identification radiofréquence. On pourrait toutefois envisager un premier système d'identification radiofréquence agencé sur un premier rabat et fonctionnant, par exemple, en haute fréquence et un second système d'identification radiofréquence agencé sur un second rabat et fonctionnant, par exemple, en ultra haute fréquence. Voire même un nombre plus important de système d'identification radiofréquence, selon le nombre de rabat présent sur la feuille d'emballage. En outre, tel que précisé ci-dessus, la feuille d'emballage objet de l'invention est très souvent configurée pour former un étui d'emballage, permettant lui-même de constituer ledit emballage, par exemple un carton, une boîte d'archivage ou autre, une fois le pliage achevé. La mise en oeuvre d'emballage de formes plus ou moins complexes rendent dans ce cas difficile la formation d'un étui d'emballage; la feuille peut alors être livrée, par exemple, telle qu'elle pour la constitution dudit emballage au moment du conditionnement des produits.

Par ailleurs, lorsque l'emballage est constitué d'un contenant et d'un couvercle séparé, par exemple une boîte d'archivage ou une boîte à chaussure, deux feuilles séparées sont dans ce cas utilisées, l'une pour former le contenant et l'autre pour former le couvercle. Dans ce cas, le système d'identification radiofréquence peut être disposé sur le rabat du couvercle.

L'étui d'emballage obtenu par la mise en forme de la feuille d'emballage et la fixation du rabat du premier bord avec le second bord de la feuille, présente généralement une section rectangulaire, les emballages ainsi obtenus présentant très souvent une forme parallélépipédique rectangle. Le positionnement du système d'identification radiofréquence entre le rabat et le second bord présente dans ce cas pour avantage d'éloigner au maximum le système d'identification radiofréquence du produit contenu dans l'emballage ce qui permet de limiter au maximum les perturbations électromagnétiques lorsque les produits contenus dans l'emballage sont de type métallique susceptibles de créer des interférences. Bien entendu, l'étui peut disposer d'une section circulaire pour la formation d'un emballage cylindrique, voire autre, sans sortir du cadre de l'invention. De tels avantages demeurent en outre avec des emballages de formes plus ou moins complexes.

En outre, ce positionnement du système d'identification radiofréquence entre le rabat sur le premier bord et le second bord présente pour avantage de laisser totalement libres la ou les faces externes de l'emballage comprenant des impressions de nature esthétique et/ou informelle. On améliore ainsi l'esthétique de l'emballage contenant le produit. Cela permet en outre de disposer de plus de place sur le coté externe de l'emballage pour y imprimer des renseignements relatifs aux produits contenus dans ledit emballage.

De manière préférentielle, le système d'identification radiofréquence est positionné sur le coté externe du rabat venant en contact avec le coté interne du second bord de la feuille d'emballage lors de la fixation entre ledit rabat et ledit second bord. On peut toutefois envisager, sans sortir du cadre de la présente invention, de positionner ledit système d'identification radiofréquence sur le coté interne du second bord dans une zone correspondant à la position du rabat lorsque son coté externe est collé sur ledit coté interne du second bord. Selon ces deux conceptions, le rabat est positionné à l'intérieur de l'emballage lorsque celui-ci est constitué. Des variantes restent bien entendu envisageables lorsque l'on envisage de laisser apparaître le rabat depuis l'extérieur de l'emballage une fois constitué, le coté interne du rabat étant alors fixé avec le coté externe du second bord de la feuille d'emballage. Dans ce dernier cas, le système d'identification radiofréquence est positionné soit sur le coté interne du rabat soit sur le coté externe du second bord de la feuille.

Selon l'invention, ce système d'identification radiofréquence est constitué d'une première antenne imprimée, au moyen d'une encre conductive, directement sur la feuille d'emballage et d'une puce de stockage de données disposée sur une pastille collée à proximité de la première antenne. La puce de stockage de données comprend une seconde antenne configurée pour assurer une connexion à distance par radiofréquence, avec la première antenne. Cette conception présente pour avantage d'optimiser les cadences de positionnement de la puce de stockage de données vis-à-vis de la première antenne imprimée sur la feuille d'emballage, étant donné que la connexion à distance par radiofréquence entre la première antenne et la seconde antenne nécessite une précision moins importante qu'une connexion physique de ladite puce avec la première antenne.

L'invention concerne également un étui d'emballage avec système d'identification radiofréquence constitué d'une feuille d'emballage objet de la présente invention. Cette feuille d'emballage comprend un premier bord longitudinal muni d'un rabat longitudinal et un second bord longitudinal, des moyens de fixation étant agencés entre le rabat et le second bord, le système d'identification radiofréquence étant positionné et dissimulé entre ledit rabat et ledit second bord.

L'invention concerne également le procédé de fabrication d'un étui d'emballage avec système d'identification radiofréquence constitué au moyen d'une feuille d'emballage comprenant un premier bord longitudinal et un second longitudinal.

Selon le procédé objet de l'invention, on met de préférence en place le système d'identification radiofréquence sur le côté externe du rabat longitudinal ou sur le coté interne du second bord longitudinal de la feuille d'emballage, puis on plie la feuille d'emballage, voire on achève son pliage si celui-ci a déjà été amorcé durant les étapes précédentes, et on fixe ledit côté externe du rabat longitudinal avec ledit côté interne du second bord longitudinal.

On comprend que selon cette conception, le rabat est disposé à l'intérieur de l'étui d'emballage. Tel que précité, on pourrait envisager une positionnement du rabat sur le coté externe de l'étui d'emballage dans quel cas on procèderait à la fixation entre le coté interne du rabat et le coté externe du second bord longitudinal et on placerait le système d'identification radiofréquence soit sur le coté interne du rabat longitudinal soit sur le coté externe du second bord longitudinal.

Selon l'invention, le système d'identification radiofréquence est mis en place en procédant à une impression d'une première antenne sur le côté externe du rabat, au moyen d'une encre conductive, puis en collant une pastille sur ce côté externe du rabat, à proximité de la première antenne, ladite pastille comprenant une puce de stockage de données munie d'une seconde antenne communiquant à distance avec la première antenne. Ce procédé présente pour avantage de pouvoir réaliser l'impression de la première antenne sur le coté externe du rabat, concomitamment avec des impressions sur la face externe de la feuille d'emballage ayant un effet esthétique et/ou informel sur la nature du produit contenu dans l'emballage. Le positionnement d'une pastille telle que précitée présente en outre pour avantage d'augmenter les cadences de fabrication de l'emballage et de l'étui. L'impression de la première antenne directement sur le coté externe du rabat permet en outre de réduire les coûts de fabrication du système d'identification radiofréquence. Bien entendu différentes techniques d'impression connues de l'homme du métier peuvent être employées. Le terme « impression » au sens de l'invention englobe en outre des techniques apparentes telles que le transfert de métal pour la formation de films métalliques.

De manière préférentielle, selon le procédé objet de la présente invention, on réalise une pluralité de feuilles d'emballage sur une plaque en carton encore appelée par l'homme du métier une impression multipose, l'impression des premières antennes sur les côtés externes des rabats étant réalisée sur la plaque, concomitamment aux éventuelles autres impressions de nature esthétique, marketing et/ou informelle. On procède ensuite au découpage de la plaque de carton pour séparer chacune des feuilles d'emballage munies de leurs premières antennes. Puis, on colle à cadence régulière les pastilles sur les côtés externes des rabats, à proximité des premières antennes. La présente invention fait référence à une plaque en carton ; celle-ci n'exclut toutefois pas les matières telles que le papier, le plastique voire autres qui peuvent être utilisées pour la mise ne oeuvre de feuilles d'emballage.

En outre en entend par plaque, d'une part les plaques en tant que telles. Cela n'exclut pas toutefois l'utilisation de bobine de feuille déroulée en continu et imprimée, le découpage étant réalisé par exemple avant l'impression, pour la formation des plaques, voire après l'impression, pour la formation des feuilles individuelles munies de leurs premières antennes.

Cela présente pour avantage d'augmenter les cadences d'impression de plusieurs feuilles d'emballage sur une même plaque, le positionnement des pastilles sur les feuilles d'emballage individuellement, après découpe de la plaque, permettant en outre de simplifier la machine pour le positionnement de la pastille sur la feuille d'emballage, à proximité de la première antenne imprimée.

D'autres caractéristiques et avantages apparaitront à la lecture de la description suivante d'un mode préférentiel de conception de l'invention s'appuyant sur des figures, parmi lesquelles :
- la figure 1 illustre la face externe d'une feuille d'emballage mettant en évidence le système d'identification radiofréquence positionné sur le coté externe du rabat ;
- la figure 2 illustre un étui d'emballage après pliage de la feuille d'emballage illustrée en figure 1 et fixation du rabat sur le second bord ;
- la figure 3 illustre une pastille comportant une puce de stockage de données munie d'une seconde antenne, telle qu'apparaissant aux figures 1 et 2 ;
- la figure 4 illustre la section d'un étui constitué au moyen d'une feuille d'emballage après collage du coté externe du rabat sur le coté interne du second bord longitudinal ;
- la figure 5 illustre une plaque sur laquelle sont imprimées plusieurs feuilles d'emballage comprenant chacune une première antenne imprimée sur le coté externe du rabat, sans pastille ;
- la figure 6 par schématisme une chaine de fabrication d'un étui d'emballage objet de la présente invention.

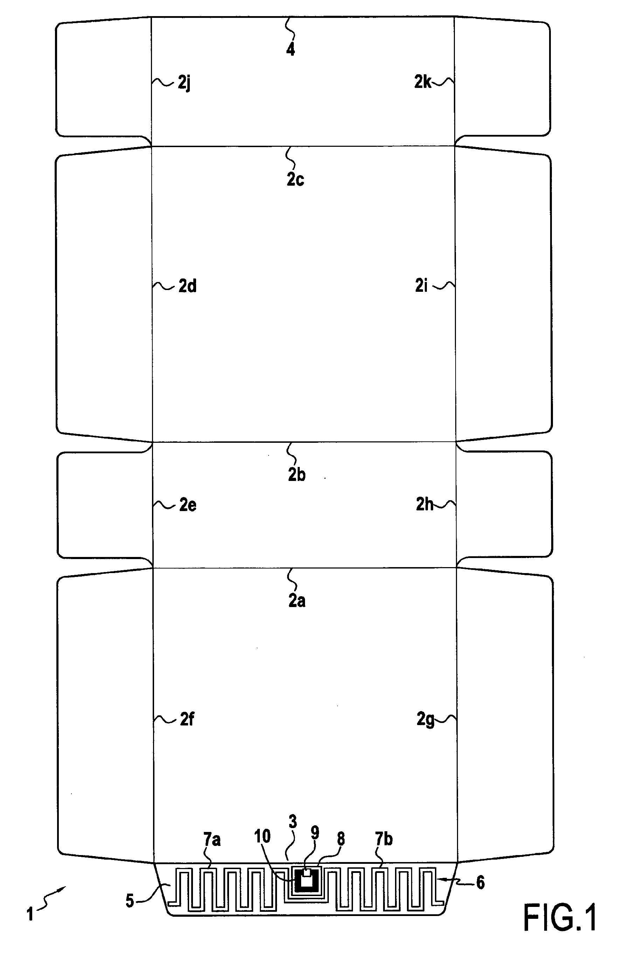

Sur la figure 1 est représenté un exemple d'une feuille d'emballage objet de la présente invention. Cette feuille d'emballage 1 comporte plusieurs lignes de pliage 2a-2k. Une fois la feuille d'emballage pliée suivant ses lignes de pliages 2a-2k, celle-ci permet de constituer un emballage permettant la réception de produits qui, dans le cas de l'exemple illustré par les figures 1 à 6, permet de constituer un emballage de la forme d'un parallélépipède rectangle. Bien entendu, cette feuille d'emballage objet de la présente invention peut disposer de lignes de pliage différentes selon la forme de l'emballage à constituer, qui dépend notamment des produits réceptionnés.

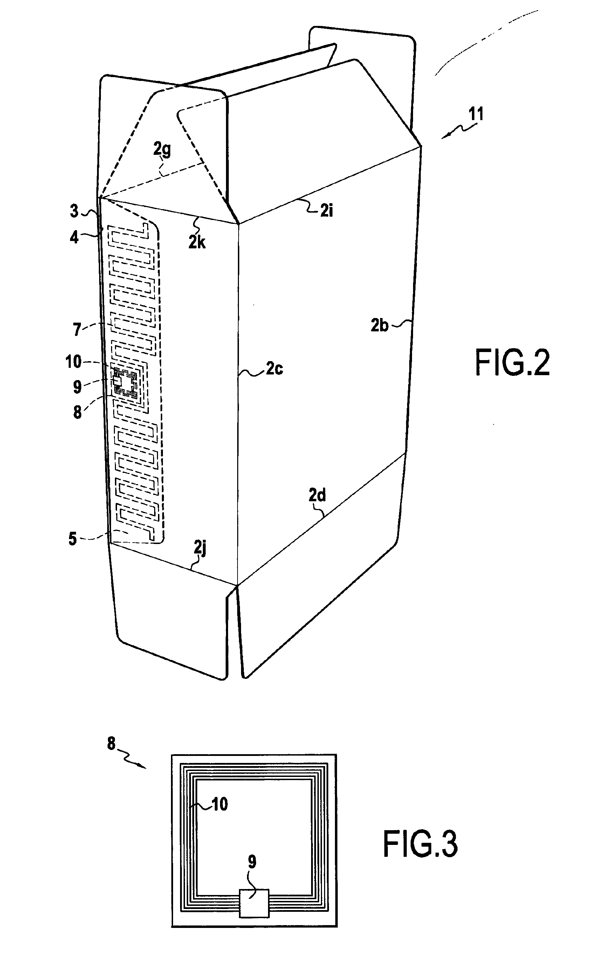

On constate sur la figure 1 que la feuille 1 comprend un premier bord 3 et un second bord 4, opposé audit premier bord 3. On constate sur la figure 1 que le premier bord comprend un rabat 5. La figure 1 permet de visualiser la face externe de la feuille d'emballage 1. On constate que le coté externe du rabat 5 comprend un système d'identification radiofréquence 6. Selon l'exemple illustré par les figures 1 à 6, ce système d'identification radiofréquence 6 comprend une première antenne 7 qui s'étend sur la longueur du rabat 5. Ce système d'identification radiofréquence 6 comprend en outre une pastille 8 de préférence autocollante, sur laquelle est agencée une puce 9 munie d'une seconde antenne 10. Cette pastille 8 est mise en évidence sur la figure 3.

Sur la figure 1, la première antenne 7 dispose d'une forme particulière qui n'est pas limitative, cette forme pouvant être modifiée et dépendant notamment de la longueur nécessaire pour la première antenne 7, correspondant à la longueur d'ondes et dépendant en particulier du matériau utilisé pour la feuille, notamment du carton, ainsi que des produits emballés, la seule condition étant d'étendre cette première antenne 7 sur la longueur du rabat en sorte de permettre son positionnement sur celle-ci. Sur la figure 1, la première antenne 7 comprend deux branches 7a, 7b qui s'étendent de part et d'autre de la pastille 8 supportant la pièce 9. Cette première antenne 7 est imprégnée directement sur le coté externe du rabat 5. Cette impression de la première antenne 7 est réalisée au moyen d'une encre comprenant par exemple des particules d'argent ou tout autre matériau assurant une bonne conductivité. De telles encres conductives sont connues de l'homme du métier. En outre, cette impression de la première antenne 7 pourrait être réalisée concomitamment avec d'autres impressions réalisées sur la face externe de la feuille d'emballage 1, notamment en vue de produire des effets esthétiques, marketing et/ou informels sur la nature du produit emballé.

La puce de stockage de données 9 sur la pastille 8, illustrée en figure 3, est de préférence une puce AK « Adaptiv Kernel », connue de l'homme du métier.

On peut, bien entendu, envisager des variantes de conception du système d'identification radiofréquence 6 comme, par exemple, la mise en oeuvre d'une première antenne de conception similaire à la première antenne 7 illustrée en figure 1 et utilisant une puce de stockage de données munie de pattes d'accrochage configurées pour être connectées directement sur la première antenne en sorte d'assurer une liaison directe avec celle-ci. Selon une autre variante, on peut envisager l'utilisation d'une étiquette RFID, bien connue de l'homme du métier, laquelle présente alors une forme adaptée pour permettre son positionnement sur le rabat 5.

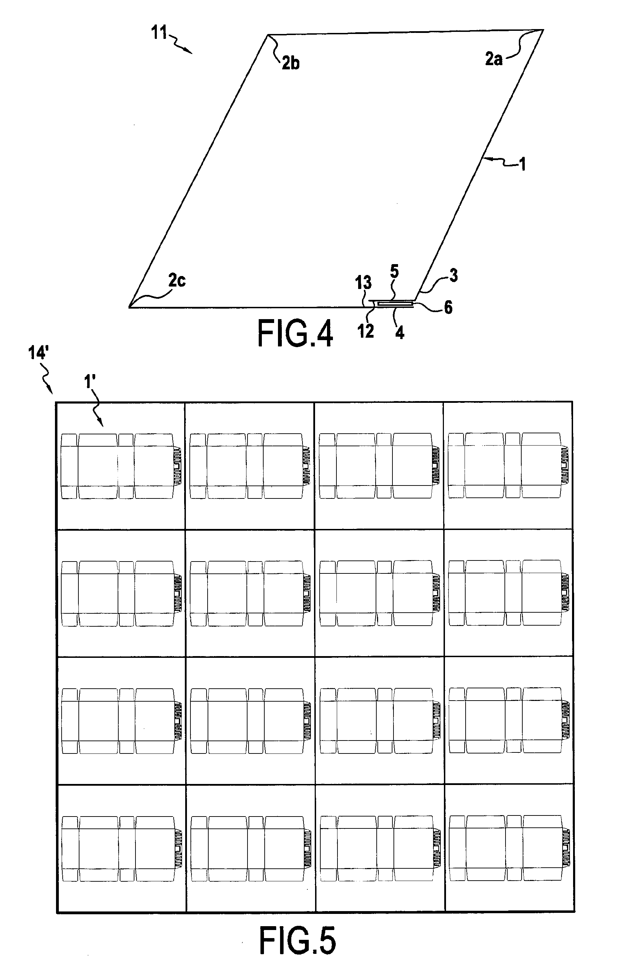

Les figures 2 et 4 illustrent un étui 11 qui est obtenu après pliage de la feuille d'emballage 1 illustrée en figure 1 suivant les lignes de pliage 2a, 2b, 2c, le coté externe 12 du rabat 5 étant fixé, de préférence par collage, avec le coté interne 13 du second bord 4 de la feuille d'emballage 1, tel que cela apparaît notamment sur la figure 4. On constate ainsi sur la figure 4 que le système d'identification radiofréquence 6 est positionné entre le second bord 4 de la feuille d'emballage 1 et le rabat 5, ce qui le protège tant de l'intérieur que de l'extérieur de l'étui 11. On constate en outre au regard de la figure 4 qu'il serait possible de mettre en oeuvre le système d'identification radiofréquence 6 sur le coté interne 13 du second bord 4 plutôt que sur le coté externe 12 du rabat 5, sans sortir du cadre de la présente invention. En outre, selon la conception illustrée en figures 2 et 4, le rabat est positionné coté intérieur de l'étui 11. Des variantes de mise en oeuvre restent bien entendu envisageables en positionnant le rabat 5 à l'extérieur de l'étui 11, c'est-à-dire en collant la face interne du rabat 5 avec le coté externe du second bord 4. Dans ce cas, le système d'identification radiofréquence 6 serait positionné soit sur le coté interne du rabat 5 soit sur le coté externe du second bord 4.

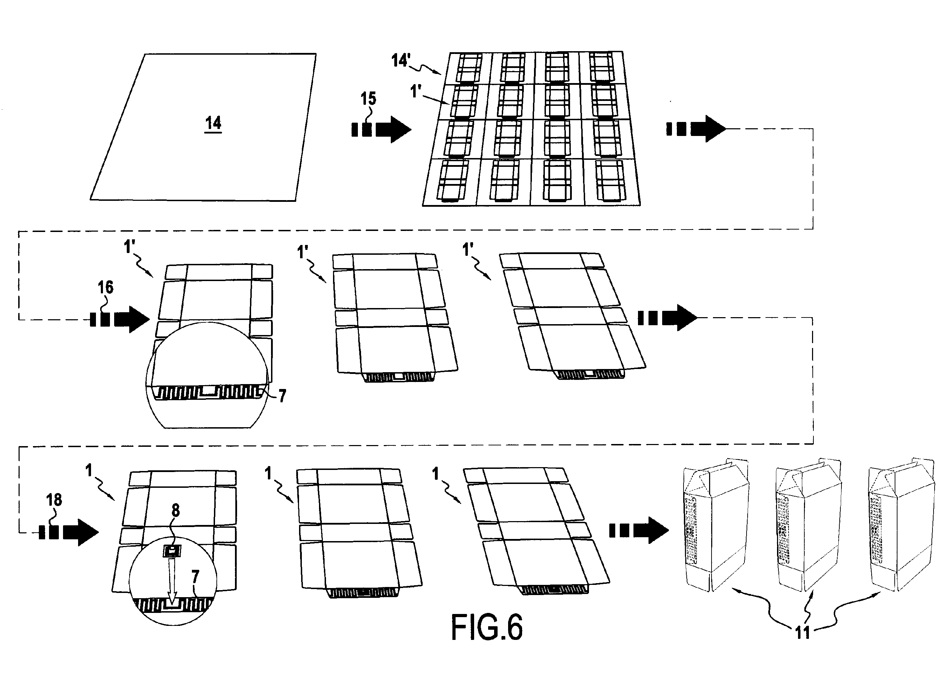

Selon la conception préférentielle illustrée aux figures 1 à 6, les étuis 11 sont mis en oeuvre en partant initialement d'une plaque vierge 14 illustrée sur la figure 6. Cette plaque vierge 14 passe au travers d'un ou plusieurs groupes d'impression 15 permettant d'imprimer sur la face externe de la feuille 1 des éventuelles impressions de nature esthétique, marketing et/ou informelle ainsi que concomitamment, d'imprimer la première antenne 7. La plaque imprimée 14' est alors constituée d'une pluralité de feuilles d'emballages 1', sur lesquelles sont imprimées les premières antennes 7, mais ne disposant pas encore des pastilles 8, tel qu'illustré sur les figures 5 et 6. L'impression de ces feuilles d'emballages 1' est de préférence mise en oeuvre en sorte que le rabat 5 soit disposé dans le sens longitudinal, tel qu'illustré sur les figures 5 et 6, c'est-à-dire dans le sens d'avance sur la chaine de fabrication. On pourrait toutefois prévoir un positionnement différent des feuilles d'emballage 1' sur la plaque imprimée 14' ainsi qu'un transfert des feuilles d'emballage 1' avec un positionnement différent sur la chaîne de fabrication selon la configuration des machines de cette chaîne de fabrication. La plaque imprimée 14' passe alors par un poste de découpage 16, par exemple au moyen d'une machine de type autoplatine ou massicot, permettant de découper et de rainer individuellement chaque feuille d'emballage 1' de la plaque imprimée.

On peut toutefois partir d'une bobine de feuille déroulée et découper celle-ci en plaque avant de poursuivre les étapes définies ci-dessus. On peut également partir d'une bobine de feuille déroulée sur laquelle on réalise directement les étapes définies ci-dessus, sans prédécoupage de cette bobine en plaque.

L'étape suivante consiste à positionner les pastilles 8 sur les rabats 5 à proximité des premières antennes 7 sur les feuilles d'emballage 1' au moyen d'une machine 18 de positionnement des pastilles 8 de type étiqueteuse ou équivalent. L'utilisation de pastilles 8 présente pour avantage d'appliquer celles-ci sur le rabat 5 à proximité de la première antenne 7 avec une cadence soutenue évitant de constituer un goulot d'étranglement au niveau du poste de travail sur la chaine de fabrication. Cette étape permet d'achever la conception de la feuille d'emballage 1.

Les feuilles d'emballage 1 ainsi obtenues subissent alors une dernière étape de pliage puis de fixation du coté externe 12 du rabat 5 avec le coté interne 13 du second bord 4 de la feuille d'emballage 1. Cette fixation est de préférence mise en oeuvre par collage, permettant ainsi d'obtenir l'étui 11 tel qu'illustré sur la figure 2 en sortie de chaine de fabrication.

La mise en oeuvre sous la forme d'étui 11 présente pour avantage de faciliter l'empilage desdits étuis 11 les uns sur les autres en les conservant convenablement à plat. En effet l'étui 11 de la figure 2 peut être facilement aplati suivant ses lignes de pliages, par exemple les lignes de pliages 2a et 2c pour limiter son encombrement lors de la livraison chez l'industriel. Il n'est toutefois pas exclu de livrer chez les industriels, pour la réalisation de l'emballage de leurs produits, directement les feuilles d'emballage 1 empilées les unes sur les autres, l'industriel réalisant dans ce cas les dernières étapes de pliage et de collage soit pour former préalablement ledit étui 11 soit pour constituer directement l'emballage final contenant le produit, en fonction du procédé de conditionnement dudit produit. L'empilage à plat des feuilles d'emballage 1 pour leur acheminement directement chez l'industriel présente toutefois pour inconvénient, vis-à-vis de la forme en étui 11, de générer une surépaisseur du côté du premier bord 3 du fait de la présence du système d'identification radiofréquence 6 sur le rabat 5, ayant pour conséquence de ne pouvoir obtenir un empilage à plat convenable.

Le positionnement du rabat 5 et du second bord 4 dans le sens longitudinal présente pour avantage de positionner directement la feuille d'emballage 1 dans le sens d'avance sur la chaine de fabrication, tel qu'illustré sur la figure 6, et facilite ainsi la réalisation des étapes de pliage de la feuille d'emballage 1 puis de collage du rabat 5 sur le second bord 4 pour la formation de l'étui d'emballage 11 en sortie de chaine de fabrication. On pourrait bien entendu envisager la mise ne oeuvre du premier bord 3 muni de son rabat 5 et du second bord 4 dans le sens transversal et non longitudinal, sans sortir du cadre de l'invention. Cela aurait toutefois pour conséquence de modifier la conception de la chaîne de fabrication des étuis 11. Cela peut toutefois être envisagé sans difficulté lorsque la forme en étui 11 est mise en oeuvre directement chez l'industriel au moment du conditionnement de ses produits.

D'autres caractéristiques et avantages de la présente invention peuvent être envisagés notamment quant à la forme de la première antenne 7 et aux encres conductives utilisées, voire quant à la mise en oeuvre du système d'identification radiofréquence 6, quant à la position du rabat 5 et du second bord 4 sur la feuille d'emballage 1 selon la complexité de la forme finale de l'emballage contenant le produit.

## Revendications

1. Feuille d'emballage (1) comprenant au moins deux bords (3, 4), le premier (3) des deux bords comprenant un rabat (5), ladite feuille (1) étant configurée pour former un étui d'emballage (11) lors de la fixation du rabat (5) sur le second (4) des deux bords, ladite feuille d'emballage comprenant un système d'identification radiofréquence (6) qui est agencé soit sur le rabat (5), soit sur le second bord (4), en sorte d'être dissimulé entre ledit rabat (5) et ledit second bord (4) lors de leur fixation entre eux, **caractérisée en ce que** le système d'identification radiofréquence (6) est constitué d'une première antenne (7) imprimée au moyen d'une encre conductive directement sur la feuille d'emballage (1), et d'une puce de stockage de données (9) disposée sur une pastille (8) collée à proximité de la première antenne (7), ladite puce de stockage de données (9) comprenant une seconde antenne (10) configurée pour assurer une connexion à distance par radiofréquence avec la première antenne (7), la première antenne (7) étant constituée de deux branches (7a, 7b) s'étendant de part et d'autre de la pastille (8) dans le sens de la longueur vis-à-vis du rabat (5).

2. Feuille d'emballage (1) selon la revendication **1**, le système d'identification radiofréquence (6) étant positionné sur le côté externe (12) du rabat (5) venant en contact avec le côté interne (13) du second (4) bord lors de leur fixation entre eux.

3. Feuille d'emballage (1) selon la revendication **1**, les deux branches (7a, 7b) ayant une forme qui est adaptée en fonction de la longueur d'onde recherchée, fonction du matériau de la feuille d'emballage et du produit à emballer.

4. Etui d'emballage (11) avec système d'identification radiofréquence (6) constitué d'une feuille d'emballage (1) objet de l'une des revendications **1 à 3,** comprenant un premier bord (3) longitudinal muni d'un rabat (5) longitudinal et un second bord (4) longitudinal, des moyens de fixation étant agencés entre le rabat (5) et le second bord (4), le système d'identification radiofréquence (6) étant dissimulé entre ledit rabat (5) et ledit second bord (4).

5. Procédé de fabrication d'un étui d'emballage (11) avec système d'identification radiofréquence (6), objet de la revendication **4, caractérisé en ce que** :
- on imprime une première antenne (7) constituée de deux branches (7a, 7b) sur le côté externe (12) du rabat (5) ;
- on colle une pastille (8) sur ce côté externe (12) du rabat (5), à proximité de la première antenne (7), ladite pastille (8) comprenant une puce de stockage de données (9) munie d'une seconde antenne (10) communiquant avec la première antenne (7),
- on plie la feuille d'emballage (1) et on fixe ledit côté externe (12) du rabat (5) longitudinal avec le côté interne (13) du second bord (4) longitudinal.

6. Procédé selon la revendication **5,** dans lequel:
- on réalise une pluralité de feuilles d'emballage (1') sur une plaque (14), l'impression des premières antennes (7) sur les côtés externes (12) des rabat (5) étant réalisée sur la plaque (14) ;
- on procède ensuite au découpage de la plaque imprimée (14') pour séparer chacune des feuilles d'emballage (1') munies de leurs premières antennes (7) ;
- on colle ensuite à cadence régulière les pastilles (8) sur les côtés externes (12) des rabats (5), à proximité des premières antennes (9), permettant de finaliser la feuille d'emballage (1).

## Patentansprüche

1. Verpackungsblatt (1), das mindestens zwei Ränder (3, 4) aufweist, wobei der erste Rand (3) der zwei Ränder einen Umschlag (5) aufweist, wobei das Blatt (1) konfiguriert ist, um ein Verpackungsetui (11) beim Befestigen des Umschlags (5) auf dem zweiten (4) der zwei Ränder zu bilden, wobei das Verpackungsblatt ein Hochfrequenzidentifikationssystem (6) aufweist, das entweder auf dem Umschlag (5) oder auf dem zweiten Rand (4) derart eingereichtet ist, dass es zwischen dem Umschlag (5) und dem zweiten Rand (4) bei der Befestigung aneinander verborgen ist, **dadurch gekennzeichnet, dass** das Hochfrequenzidentifikationssystem (6) aus einer ersten Antenne (7), die mittels einer leitenden Tinte direkt auf das Verpackungsblatt (1) gedruckt ist, und einem Datenspeicherchip (9), der auf einer Pastille (8) angeordnet ist, die in der Nähe der ersten Antenne (7) geklebt ist, besteht, wobei der Datenspeicherchip (9) eine zweite Antenne (10) aufweist, die konfiguriert ist, um eine Verbindung auf Entfernung durch Hochfrequenz mit der ersten Antenne (7) sicherzustellen, wobei die erste Antenne (7) aus zwei Schenkeln (7a, 7b) besteht, die sich zu beiden Seiten der Pastille (8) in die Längsrichtung gegenüber dem Umschlag (5) erstrecken.

2. Verpackungsblatt (1) nach Anspruch 1, wobei das Hochfrequenzidentifikationssystem (6) auf der Außenweite (12) des Umschlags (5), die mit der Innenseite (13) des zweiten (4) Rands bei deren Befestigung aneinander in Berührung kommt, positioniert ist.

3. Verpackungsblatt (1) nach Anspruch 1, wobei die zwei Schenkel (7a, 7b) eine Form haben, die in Abhängigkeit von der angestrebten Wellenlänge angepasst ist, die von dem Werkstoff des Verpackungsblatts und dem zu verpacken Produkt abhängt.

4. Verpackungsetui (11) mit Hochfrequenzidentifikationssystem (6), das aus einem Verpackungsblatt (1) besteht, das Gegenstand eines der Ansprüche 1 bis 3 ist, das einen ersten Längsrand (3) aufweist, der mit einem Längsumschlag (5) versehen ist, und einen zweiten Längsrand (4), wobei Befestigungsmittel zwischen dem Umschlag (5) und dem zweiten Rand (4) eingerichtet sind, wobei das Hochfrequenzidentifikationssystem (6) zwischen dem Umschlag (5) und dem zweiten Rand (4) verborgen ist.

5. Verfahren zum Herstellen eines Verpackungsetuis (11) mit Hochfrequenzidentifikationssystem (6), Gegenstand des Anspruche 4, **dadurch gekennzeichnet, dass**:
- man eine erste Antenne (7), die aus zwei Schenkeln (7a, 7b) besteht, auf die Außenseite (12) des Umschlags (5) druckt,
- man eine Pastille (8) auf dieser Außenseite (12) des Umschlag (5) in der Nähe der ersten Antenne (7) klebt, wobei die Pastille (8) einen Datenspeicherchip (9) aufweist, der mit einer zweiten Antenne (10) versehen ist, die mit der ersten Antenne (7) in Verbindung steht,
- man das Verpackungsblatt (1) faltet und man Außenweite (12) des Längsumschlags (5) mit der Innenseite (13) des zweiten Längsrands (4) befestigt,

6. Verfahren nach Anspruch 5, bei dem:
- man eine Vielzahl von Verpackungsblättern (1') auf einer Platte (14) herstellt, wobei das Drucken der ersten Antennen (7) auf die Außenseiten (12) der Umschläge (5) auf der Platte (14) ausgeführt wird,
- man danach das Schneiden der bedruckten Platte (14') vornimmt, um jedes der Verpackungsbläher (1'), die mit ihren ersten Antennen (7) versehen sind, abzutrennen,
- man anschließend in regelmäßigem Takt die Pastillen (8) auf die Außenseiten (12) der Umschläge (5) in der Nähe der ersten Antennen (9) klebt, was das Fertigstellen des Verpackungsblatts (1) erlaubt.

## Claims

1. A packaging sheet (1) including at least two edges (3, 4), the first of the two edges (3) including a flap (5), said sheet (1) being configured to form a packaging case (11) by fastening the flap (5) on the second of the two edges (4), said packaging sheet including a radiofrequency identification system (6) that is arranged either on the flap (5) or on the second edge (4) in such a manner as to be hidden between said flap (5) and said second edge (4) when they are fastened together, the sheet being **characterized in that** the radiofrequency identification system (6) is constituted by a first antenna (7) printed by means of a conductive ink directly on the packaging sheet (1), and by a data storage chip (9) arranged on a patch (8) stuck in the proximity of the first antenna (7), said data storage chip (9) having a second antenna (10) configured to provide a remote radiofrequency connection with the first antenna (7), the first antenna (7) being made up of two branches (7a, 7b) extending on either side of the patch (8) in the long reaction of the flap (5).

2. A packaging sheet (1) according to claim 1, the radiofrequency identification system (6) being positioned on the outside (12) of the flap (5) and coming into contact with the inside (13) of the second edge (4) when they are fastened together.

3. A packaging sheet (1) according to claim 1, the two branches (7a, 7b) having a shape that is adapted as a function of the desired wavelength, as a function of the material of the packaging sheet, and as a function of the article to be packaged.

4. A packaging case (11) with a radiofrequency identification system (6) constituted by a packaging sheet (1) in accordance with any one of claims 1 to 3, having a first longitudinal edge (3) provided with a longitudinal flap (5) and a second longitudinal edge (4), fastener means being arranged between the flap (5) and the second edge (4), the radiofrequency identification system (6) being hidden between said flap (5) and said second edge (4).

5. A method of fabricating a packaging case (11) with a radiofrequency identification system (6) in accordance with claim 4, the method being **characterized by** the following steps;
· printing a first antenna (7) made up of two branches (7a, 7b) on the outside (12) of the flap (5);
· sticking a patch (8) of the outside (12) of the flap (5) in the proximity of the first antenna (7), said patch (8) including a data storage chip (9) having a second antenna (10) communicating with the first antenna (7); and
· folding the packaging sheet (1) and fastening said outside (12) of the longitudinal flap (5) on the inside (13) of the second longitudinal edge (4).

6. A method according to claim 5, including the hollowing steps:
· making a plurality of packaging sheets (1') in a larger sheet (14), the first antennas (7) being printed on the outsides (12) of the flaps (5) by printing on the larger sheet (14);
· then cutting up the printed larger sheet (14') in order to separate each of the packaging sheets (1') with its respective first antenna (7); and
· then sticking the patches (8) at a regular rate on the outsides (12) of of the flaps (5) in the proximity of the first antennas (9), thereby enabling the packaging sheet (1) to be finalized.
